# FASCICULE DE BREVET EUROPEEN

(11) **EP 4 188 757 B1**
(45) Date de publication et mention de la délivrance du brevet: **04.12.2024**
(21) Numéro de dépôt: 21740104.1
(22) Date de dépôt: 13.07.2021
(51) Int. Cl.: B60S 1/40

(54) **CONNECTEUR D'UN BALAI D'ESSUYAGE**
VERBINDER FÜR EIN WISCHBLATT
CONNECTOR FOR A WIPER BLADE

(30) Priorité: 27.07.2020 FR 2007899
(43) Date de publication de la demande: 07.06.2023
(73) Titulaire: Valeo Systèmes d'Essuyage, 78322 le Mesnil Saint Denis (FR)
(72) Inventeur: GAUCHER, Vincent, 78321 LE MESNIL SAINT DENIS (FR); MOULEYRE, Guillaume, 78321 LE MESNIL SAINT DENIS (FR); HOUSSAT, Stéphane, 78321 LE MESNIL SAINT DENIS (FR)
(74) Mandataire: Valeo Visibility
(86) Numéro de dépôt international: PCT/EP2021/069537
(87) Numéro de publication internationale: WO 2022/023032

(56) Documents cités:
- EP-A1- 3 000 665
- WO-A1-2007/142390
- CN-A- 111 845 644
- CN-Y- 2 900 271
- DE-A1- 102007 016 479
- US-A1- 2008 163 448

## Description

La présente invention se rapporte au domaine des dispositifs d'essuyage de surfaces vitrées pour véhicules automobiles.

Typiquement, un système d'essuyage destiné à équiper un véhicule automobile comprend au moins un balai d'essuie-glace adapté pour venir au contact d'une surface vitrée telle que le pare-brise d'un véhicule automobile et au moins un bras d'essuie-glace adapté pour entraîner en rotation le balai d'essuyage. Le balai d'essuyage comprend classiquement une lame d'essuyage, en général en caoutchouc, destinée à frotter contre la surface vitrée du véhicule pour évacuer de l'eau et/ou des salissures en l'amenant en dehors du champ de vision du conducteur. Le balai est porté par un bras qui est entraîné par un moteur dans un mouvement de va-et-vient angulaire.

Dans de tels dispositifs, le balai d'essuyage comporte au moins un adaptateur, un connecteur et une lame d'essuyage. L'adaptateur comprend une première portion liée au connecteur du balai d'essuyage et une deuxième portion liée au bras. L'adaptateur est classiquement monté pivotant par rapport au connecteur pour assurer une liaison en rotation entre le bras et le balai d'essuyage, permettant ainsi au balai d'essuyage de suivre l'évolution d'une courbure de la surface vitrée du véhicule.

Le balai d'essuyage effectue des mouvements de va-et-vient, entraînant la lame d'essuyage sur la surface vitrée, de sorte que la lame d'essuyage évacue l'eau et les salissures accumulées sur la surface vitrée du véhicule. Cependant, la lame d'essuyage s'use dans le temps et son efficacité d'essuyage diminue. L'utilisateur doit dès lors changer le balai d'essuyage lorsque les conditions de sécurité de conduite ne sont plus respectées. L'utilisateur désolidarise du bras le connecteur du balai d'essuyage usé puis fixe un nouveau balai d'essuyage au bras.

Il est connu qu'un type de bras comprend un élément de fixation prenant la forme d'un crochet. Dans ce mode de réalisation particulier, le connecteur du balai d'essuyage comporte généralement un arbre sur lequel se positionne l'adaptateur, le crochet du bras se fixant ensuite sur l'adaptateur. Une ouverture est présente sur le connecteur pour pouvoir insérer le crochet du bras de sorte à venir en prise sur l'adaptateur. Le crochet du bras et l'adaptateur du balai d'essuyage comportent généralement chacun des éléments de verrouillage permettant au balai d'essuyage de rester solidaire du bras.

L'ouverture du connecteur doit être suffisamment grande pour permettre au crochet du bras de venir en prise sur l'adaptateur. Dès lors, et une fois le balai d'essuyage monté sur le bras, le bras ne comble qu'une partie de l'ouverture. Le connecteur comprend généralement un capot fermant au moins en partie l'ouverture du connecteur laissée à découvert par le crochet du bras en prise sur l'adaptateur, ce capot ayant pour fonction d'empêcher des salissures et de l'eau de s'insinuer dans le connecteur à travers son ouverture.

Un tel capot est ainsi amovible afin de ne pas gêner le montage ou le démontage du balai d'essuyage par rapport au bras. En d'autres termes, et tel que cela est illustré en figure 16 du document DE202009013452U, le capot est susceptible de prendre une position dans laquelle il recouvre au moins en partie l'ouverture du connecteur. Cependant, un tel capot n'est pas maintenu en position et est susceptible de s'enfoncer plus ou moins dans le connecteur, en fonction du type de crochet rencontré. Cette absence de positionnement fiable du capot impacte d'un part la fiabilité du blocage longitudinal du crochet sur l'adaptateur et génère d'autre part un aspect inesthétique du système d'essuyage, dans sa globalité. DE-A-102007016479 montre un connecteur similaire.

Dans ce contexte, la présente invention propose ainsi de corriger ces deux défauts.

La présente invention a pour objet principal un connecteur d'un balai d'essuyage, comprenant au moins un corps principal et un capot rotatif, le corps principal comportant au moins une paroi de fond et deux parois latérales participant à délimiter un volume interne au moins en partie fermé par le capot rotatif, le capot rotatif comprenant au moins une paroi de recouvrement, une paroi de renfort, une articulation et un dispositif d'accrochage pour solidariser le capot rotatif par rapport à la paroi de fond du corps principal, la paroi de recouvrement s'étendant longitudinalement entre deux extrémités longitudinales, l'articulation étant ménagée au niveau de l'une des extrémités longitudinales de la paroi de recouvrement et assurant une rotation du capot rotatif autour d'un axe, la paroi de renfort s'étendant depuis la paroi de recouvrement vers la paroi de fond du corps principal, le capot rotatif comprenant un dispositif d'appui du capot rotatif sur la paroi de fond du corps principal.

Le balai d'essuyage est configuré pour être relié à un bras d'un système d'essuyage d'un véhicule. Le connecteur du balai d'essuyage assure au moins en partie la connexion entre le balai d'essuyage et le bras du système d'essuyage. Le balai d'essuyage comprend ainsi une lame d'essuyage généralement rendu solidaire du corps principal. Le capot rotatif ferme quant à lui une partie du volume interne délimité par les parois latérales et la paroi de fond du corps principal. Une autre partie de ce volume interne reste ouverte sur l'extérieur de sorte à permettre au bras du système d'essuyage du véhicule d'être au moins en partie logé dans le volume interne et de faire saillie hors de ce dernier.

Le capot rotatif est mobile autour d'un axe en prenant une première position dans laquelle le dispositif d'accrochage en position rend solidaire le capot rotatif du corps principal et ferme une partie du volume interne du capot rotatif, et une deuxième position dans laquelle le capot rotatif est au moins en partie positionné à l'extérieur du volume interne du corps principal.

Selon l'invention, le dispositif d'appui est en contact avec la paroi de fond du corps principal. De la sorte, le dispositif d'appui empêche le capot rotatif de s'enfoncer dans le volume interne tout en maintenant de façon efficace la position du capot rotatif par rapport au corps principal, de manière à ce que ce capot remplisse efficacement sa fonction de blocage du crochet du bras.

Selon l'invention, le dispositif d'accrochage comprend une paroi de support et un ergot de fixation, la paroi de support s'étendant depuis la paroi de recouvrement vers la paroi de fond du corps principal en présentant une extrémité libre, l'ergot de fixation étant ménagé au niveau d'une extrémité libre de la paroi de support de sorte à attacher le capot rotatif sur la paroi de fond du corps principal.

Selon une autre caractéristique optionnelle de l'invention, la paroi de support du dispositif d'accrochage s'étend dans un plan sécant et distinct du plan dans lequel s'inscrit la paroi de renfort.

On comprend que la paroi de support et la paroi de renfort s'étendent l'une par rapport à l'autre en formant une croix s'étendant depuis la paroi de recouvrement vers la paroi de fond du corps principal.

Selon une autre caractéristique de l'invention, l'ergot de fixation du capot rotatif coopère avec la paroi de fond du corps principal pour rendre solidaire le capot rotatif du corps principal.

Selon une autre caractéristique optionnelle de l'invention, le dispositif d'appui du capot rotatif forme un bloc qui fait saillie de la paroi de support.

En d'autres termes, le dispositif d'appui forme un parallélépipède rectangle émergeant de la paroi de support en direction de l'articulation.

Selon une autre caractéristique optionnelle de l'invention, le dispositif d'appui et l'ergot de fixation délimitent une rainure configurée pour loger au moins en partie la paroi de fond du corps principal.

Lorsque la paroi de fond se loge au moins en partie dans la rainure formée en partie par le dispositif d'appui et l'ergot de fixation, le capot rotatif est verrouillé au corps principal.

Selon une autre caractéristique optionnelle de l'invention, le dispositif d'appui forme une excroissance de la paroi de renfort en s'étendant vers la paroi de fond du corps principal, le dispositif d'appui comprenant un bord libre configuré pour être en contact avec la paroi de fond.

L'excroissance est une portion de la paroi de renfort présentant une dimension longitudinale moins importante que la dimension longitudinale de la paroi de renfort en elle-même. Cette dimension longitudinale est mesurée le long d'un axe parallèle à une direction d'extension principale du corps principal.

Selon une autre caractéristique optionnelle de l'invention, la paroi de fond comprend une saignée logeant au moins en partie le bord libre du dispositif d'appui. La saignée est ménagée sur la paroi de fond en regard du dispositif d'appui, l'extrémité libre de l'excroissance formant le dispositif d'appui se logeant en partie dans la saignée, le capot rotatif prenant ainsi appui au niveau du fond de la saignée.

Selon une autre caractéristique optionnelle de l'invention, la paroi de fond comprend une nervure s'étendant vers le capot rotatif, le bord libre du dispositif d'appui étant en contact avec la nervure de la paroi de fond. La nervure est ménagée sur la paroi de fond en regard du dispositif d'appui, l'extrémité libre de l'excroissance formant le dispositif d'appui étant en contact avec un bord d'extrémité de la nervure, le capot rotatif prenant ainsi appui au niveau bord d'extrémité de la nervure.

Selon une autre caractéristique optionnelle de l'invention, la paroi de recouvrement comprend deux bords latéraux s'étendant entre chacune des extrémités longitudinales de la paroi de recouvrement et configurés pour être en contact avec les parois latérales du corps principal, le dispositif d'appui comprenant au moins une patte s'étendant dans un plan parallèle au plan d'extension principale de la paroi de renfort en faisant saillie depuis l'un des bords latéraux de la paroi de recouvrement vers la paroi de fond du corps principal.

Selon une autre caractéristique optionnelle de l'invention, la paroi de recouvrement du capot rotatif est logée dans le volume interne du corps principal.

Chacune des parois latérales s'étend depuis la paroi de fond vers un bord d'extrémité. Lorsque le capot rotatif est rendu solidaire du corps principal par l'ergot de fixation, la paroi de recouvrement affleure au moins un des bords d'extrémité des parois latérales.

Selon une autre caractéristique optionnelle de l'invention, l'articulation comprend au moins un palier de rotation ouvert et dans lequel est logé au moins un pion du corps principal, le capot rotatif pivotant autour du pion du corps principal, l'articulation comprenant au moins une encoche distincte du palier de rotation et facilitant l'insertion du pion du corps principal dans le palier de rotation.

L'invention a également pour objet un balai d'essuyage comprenant au moins un connecteur selon l'une quelconque des caractéristiques précédentes.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation d'un véhicule comprenant un système d'essuyage équipé d'un balai d'essuyage selon l'invention ;
[Fig. 2] est une représentation en perspective d'un connecteur selon un premier mode de réalisation ;
[Fig.3] est une vue éclatée du connecteur selon la figure 2 ;
[Fig. 4] est une coupe longitudinale du connecteur selon la figure 2 ;
[Fig. 5] est une représentation en perspective d'un capot rotatif d'un connecteur selon un deuxième mode de réalisation ;
[Fig. 6] est une coupe longitudinale du connecteur selon la figure 5 ;
[Fig. 7] est une représentation en perspective d'un capot rotatif d'un connecteur selon un troisième mode de réalisation ;
[Fig. 8] est une coupe longitudinale du connecteur selon la figure 7 ;
[Fig. 9] est une représentation en perspective d'un capot rotatif d'un connecteur selon un quatrième mode de réalisation ;
[Fig. 10] est une coupe verticale du connecteur selon la figure 9.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Dans la description qui va suivre, les dénominations « longitudinale », « transversale » et « verticale » se réfèrent à l'orientation d'un connecteur selon l'invention. Une direction longitudinale correspond à une direction principale d'extension d'un corps principal du connecteur, cette direction longitudinale étant parallèle à un axe longitudinal L d'un repère L, V, T illustré sur les figures et parallèle à une direction d'extension majoritaire d'un balai d'essuyage. Une direction transversale correspond à une direction parallèle à un axe transversal le long duquel s'étend principalement un cylindre du corps principal du connecteur, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et l'axe transversal T.

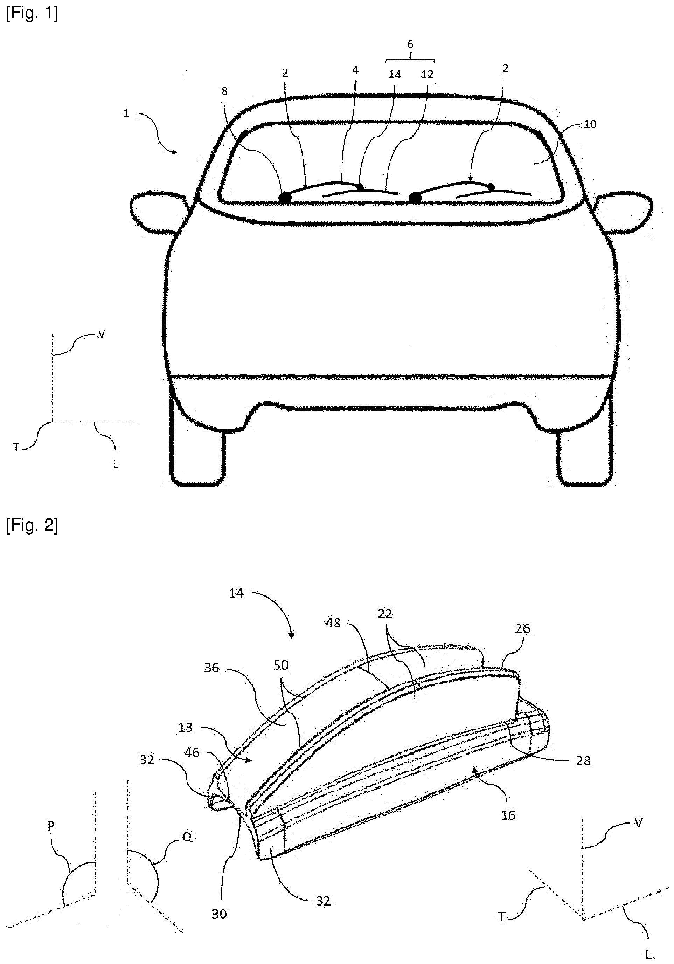

En se référant tout d'abord à la figure 1, un véhicule 1 est équipé d'au moins un système d'essuyage 2 comprenant au moins un bras 4, un balai d'essuyage 6 et un moteur électrique 8 solidaire du véhicule 1 et configuré pour entraîner un mouvement du bras 4 et du balai d'essuyage 6 sur une surface vitrée 10 du véhicule 1. Le bras 4 du système d'essuyage 2 est relié d'une part au niveau de l'une de ses extrémités longitudinales au moteur électrique 8 et d'une autre part, au niveau de son autre extrémité longitudinale, au balai d'essuyage 6.

Le moteur électrique 8 entraine dans un mouvement de va-et-vient angulaire à la fois le bras 4 et le balai d'essuyage 6 pour que le système d'essuyage 2 réalise sa fonction d'essuyage. Pour cela, le balai d'essuyage 6 comprend au moins une lame d'essuyage 12 et un connecteur 14 au niveau duquel l'une des extrémités longitudinales du bras 4 est fixée. La lame d'essuyage 12 du balai d'essuyage est plaqué sur la surface vitrée 10 du véhicule 1. Lorsque le moteur électrique 8 entraine le bras 4 et le balai d'essuyage 6 dans un mouvement de va-et-vient angulaire sur la surface vitrée 10, la lame d'essuyage 12 essuie la surface vitrée 10 du véhicule 1.

Le connecteur 14 loge généralement un adaptateur sur lequel est accroché le bras 4. Le connecteur 14 et l'adaptateur forment ainsi une liaison entre le bras 4 et le balai d'essuyage 6 tout en permettant à la lame d'essuyage 12 d'adapter sa position sur la surface vitrée 10 du véhicule 1 lorsque le bras 4 et le balai d'essuyage 6 sont entraînés en mouvement par le moteur électrique 8 du véhicule 1.

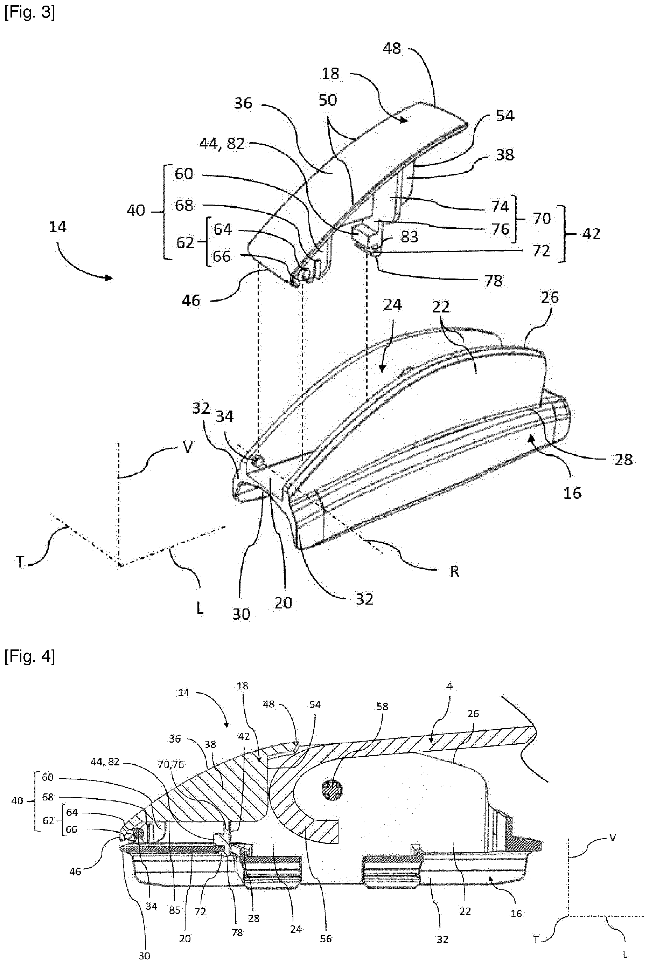

Tel qu'illustré sur les figures 2 et 3, le connecteur 14 comprend au moins un corps principal 16 et un capot rotatif 18, le corps principal 16 comportant au moins une paroi de fond 20 et deux parois latérales 22 participant à délimiter un volume interne 24 au moins en partie fermé par le capot rotatif 18. Le connecteur 14 s'étend principalement le long d'une direction longitudinale L, chaque paroi du corps principal 16 s'étendant au moins le long de cette direction longitudinale L. Les parois latérales 22 s'étendent également le long d'une direction verticale V entre une extrémité supérieure 26 et une extrémité inférieure 28, la direction verticale V étant perpendiculaire à la direction longitudinale L. La paroi de fond 20 s'étend quant à elle le long d'une direction transversale T entre les parois latérales 22 du corps principal 16, avantageusement au niveau de leurs extrémités inférieures 28, la direction transversale T étant perpendiculaire aux directions longitudinale L et verticale V. Les parois latérales 22 et la paroi de fond 20 participent à délimiter le volume interne 24 dans lequel se loge le capot rotatif 18 et, tel que plus particulièrement illustré sur la figure 4, une des extrémités du bras 4.

Chacune des extrémités supérieures 26 des parois latérales 22 s'étend longitudinalement sensiblement en prenant une forme courbée. De la sorte, une hauteur d'une des parois latérales 22 au niveau de l'une ou de l'autre de ses extrémités longitudinales, c'est-à-dire une des extrémités des parois latérales 22 selon la direction longitudinale L, présente une dimension inférieure à une hauteur de cette même paroi latérale 22 mesurée entre ces extrémités longitudinales, cette hauteur étant mesurée le long d'un axe parallèle à la direction verticale V.

Selon l'exemple illustré sur les figures 2 et 3, le corps principal 16 comprend également un support 30 de la lame d'essuyage du balai d'essuyage. Ce support 30 prenant globalement une forme de « U » dont la base est au moins en partie formée par la paroi de fond 20 et dont chacune des branches du « U » sont composées par une paroi d'accrochage 32 s'étendant au moins le long de la direction verticale V depuis la paroi de fond 20 à l'opposé des parois latérales 22 du corps principal 16.

Le corps principal 16 comprend, selon l'exemple illustré sur la figure 3, une paire de pions 34 faisant saillie de chacune des parois latérales 22 vers l'autre paroi latérale 22. La paire de pions 34 s'étend le long de la direction transversale T au niveau de l'une des extrémités longitudinales du corps principal 16. Ces pions 34 sont configurés pour coopérer avec le capot rotatif 18 de sorte à former un pivot du capot rotatif 18 par rapport au corps principal 16. Dans un mode de réalisation alternatif, le corps principal 16 comprend un arbre en lieu et place de la paire de pions 34, l'arbre s'étendant transversalement entre les parois latérales 22 du corps principal 16 au niveau de l'une des extrémités longitudinales du corps principal 16.

Le capot rotatif 18 peut se loger au moins en partie, voire en totalité, dans le volume interne 24 du corps principal 16. Le capot rotatif 18 comprend une paroi de recouvrement 36, une paroi de renfort 38, une articulation 40, un dispositif d'accrochage 42 pour solidariser le capot rotatif 18 par rapport à la paroi de fond 20 du corps principal 16 et, selon l'invention, un dispositif d'appui 44 du capot rotatif 18 sur la paroi de fond 20 du corps principal 16.

La paroi de recouvrement 36 s'étend longitudinalement entre une première extrémité longitudinale 46 et une deuxième extrémité longitudinale 48, la première extrémité longitudinale 46 de la paroi de recouvrement 36 étant positionné au niveau de l'une des extrémités longitudinales du corps principal 16. La paroi de recouvrement 36 comprend également deux bords latéraux 50 s'étendant entre chacune des extrémités longitudinales 46, 48 de la paroi de recouvrement 36 et configurés pour être en contact avec les parois latérales 22 du capot rotatif 18. Plus particulièrement, les bords latéraux 50 sont configurés pour être en contact des extrémités supérieures 26 des parois latérales 22 du corps principal 16, de sorte à affleurer ces parois latérales 22 quand le capot rotatif 18 est en position de fermeture.

La paroi de recouvrement 36 suit globalement la forme courbée des extrémités supérieures 26 des parois latérales 22. Lorsque le capot rotatif 18 est logé dans le volume interne 24 du corps principal 16, la paroi de recouvrement 36 ferme au moins en partie ce volume interne 24, depuis l'une des extrémités longitudinales du corps principal 16 en direction de l'autre. La paroi de recouvrement 36 ne ferme cependant pas la totalité du volume interne 24, une partie de ce volume devant être accessible au bras du système d'essuyage.

La paroi de renfort 38 du capot rotatif 18 s'étend depuis la paroi de recouvrement 36 vers la paroi de fond 20 du corps principal 16 le long des directions longitudinale L et verticale V. Avantageusement, la paroi de renfort 38 est ménagée à équidistance des bords latéraux 50 de la paroi de recouvrement 36, c'est-à-dire que la paroi de renfort 38 est centrée sur la paroi de recouvrement 36 par rapport aux bords latéraux 50 de la paroi de recouvrement 36 et selon la direction transversale T. La paroi de renfort 38 s'étend longitudinalement depuis la première extrémité longitudinale 46 de la paroi de recouvrement 36 vers un bord longitudinal 54, ce dernier étant plus proche de la première extrémité longitudinale 46 que de la deuxième extrémité longitudinale 48 de la paroi de recouvrement 36. Ce bord longitudinal 54 de la paroi de renfort 38 est configuré pour venir en appui contre le crochet du bras pour bloquer longitudinalement le balai d'essuyage par rapport au bras.

Tel qu'illustré sur la figure 4, qui est une vue en coupe du connecteur 14 selon un premier plan de coupe P passant par le connecteur, parallèle aux directions longitudinale L et verticale V et illustré à la figure 2, le bord longitudinal 54 de la paroi de renfort 38 est en contact avec une des extrémités du bras 4, cette dernière prenant ici la forme d'un crochet 56. Pour cela, le connecteur 14 comprend un cylindre 58 autour duquel est généralement installé un adaptateur (non représenté) et, lorsque le balai d'essuyage est monté sur le bras 4 du véhicule, autour duquel est positionné le crochet 56 du bras 4. Le bord longitudinal 54 de la paroi de renfort 38 bute contre le crochet 56, empêchant tout mouvement du balai d'essuyage par rapport au crochet 56 le long de la direction longitudinale.

L'articulation 40 du capot rotatif 18 est disposée au niveau de la première extrémité longitudinale 46 de la paroi de recouvrement 36 et est configurée pour coopérer avec au moins un des pions 34 de la paire de pions 34 ou avec l'arbre du corps principal 16, tels que détaillés plus haut.

L'articulation 40 consiste en au moins un flanc latéral 60 s'étendant depuis un des bords latéraux 50 de la paroi de recouvrement 36 vers la paroi de fond 20 du corps principal 16, le long des directions longitudinale L et verticale V. Le flanc latéral 60 comprend au moins un palier de rotation 62 ouvert sur l'extérieur dans lequel se loge un des pions 34 de la paire de pions 34 ou l'arbre du corps principal 16. On comprend que le palier de rotation 62 prend la forme d'un orifice traversant 64 le flanc latéral 60, cet orifice traversant 64 comprenant une entaille 66 ouvrant l'orifice traversant 64 vers l'extérieur du flanc latéral 60. Plus précisément, l'entaille 66 s'étend verticalement depuis l'orifice traversant 64 vers la paroi de fond 20 du corps principal 16. Cette entaille 66 permet de laisser passer l'un des pions 34 de la paire de pions 34 ou l'arbre du corps principal 16 vers l'orifice traversant 64, de manière à monter le capot rotatif 18 sur le corps principal 16. De la sorte, le capot rotatif 18 peut être entraîné en rotation autour de l'un des pions 34 de la paire de pions 34 ou l'arbre du corps principal 16, l'un des pions 34 de la paire de pions 34 ou l'arbre étant ainsi traversé par un axe de rotation R du capot rotatif 18.

L'articulation 40 comprend de plus une encoche 68 distincte du palier de rotation 62 facilitant l'insertion de l'un des pions 34 de la paire de pions 34 ou l'arbre du corps principal 16 dans le palier de rotation 62 du capot rotatif 18. En effet, lors de l'insertion de l'un des pions 34 de la paire de pions 34 ou l'arbre dans le palier de rotation 62, au moins une partie du flanc latéral 60 ménagée entre le palier de rotation 62 et l'encoche 68 tend à se déformer élastiquement pour permettre l'insertion de l'un des pions 34 de la paire de pions 34 ou l'arbre dans l'orifice traversant 64 du palier. Une fois l'un des pions 34 de la paire de pions 34 ou l'arbre logé dans le palier de rotation 62, la partie du flanc latéral 60 ménagée entre le palier de rotation 62 et l'encoche 68 reprend sa forme initiale.

Avantageusement, l'articulation 40 comprend deux flancs latéraux 60 tels que décrit ci-dessus s'étendant chacun depuis l'un des bords latéraux 50 de la paroi de recouvrement 36 vers la paroi de fond 20 du corps principal 16.

Tel qu'illustré sur la figure 3, le dispositif d'accrochage 42 du capot rotatif 18 comprend une paroi de support 70 et un ergot de fixation 72 disposée sur la paroi de support 70. La paroi de support 70 s'étend ici depuis la paroi de recouvrement 36 vers la paroi de fond 20 du corps principal 16, la paroi de support 70 étant plus proche de la deuxième extrémité longitudinale 48 de la paroi de recouvrement 36 que de la première extrémité longitudinale 46 de la paroi de recouvrement 36. La paroi de support 70 s'étend dans un plan sécant et non confondu à un plan dans lequel s'inscrit la paroi de renfort 38. Plus précisément et selon l'exemple illustré ici, la paroi de support 70 s'étend principalement parallèlement aux directions transversale T et verticale V, c'est-à-dire en formant une croix avec la paroi de renfort 38.

La paroi de support 70 comprend une première section 74 et une deuxième section 76, la première section 74 présentant une largeur plus importante que la deuxième section 76, une largeur étant mesurée le long d'un axe parallèle à la direction transversale T. La première section 74 de la paroi de support 70 s'étend depuis la paroi de renfort 38 jusqu'à la deuxième section 76, cette dernière prolongeant verticalement la première portion vers la paroi de fond 20 du corps principal 16.

La paroi de support 70 présente une extrémité libre 78 au niveau de laquelle est ménagée l'ergot de fixation 72 du capot rotatif 18 sur la paroi de fond 20 du corps principal 16. L'ergot de fixation 72 s'étendant longitudinalement depuis l'extrémité libre 78 de la paroi de support 70 vers la première extrémité longitudinale 46 de la paroi de recouvrement 36.

L'ergot de fixation 72 du capot rotatif 18 permet d'attacher de manière réversible le capot rotatif 18 par rapport à la paroi de fond 20 du corps principal 16. Lors du montage du capot rotatif 18, l'ergot de fixation 72 et la paroi de support 70 se déforment légèrement pour se positionner contre une face externe de la paroi de fond 20, cette face externe étant opposée à la paroi de recouvrement par rapport à l'ergot de fixation 72. De la sorte, l'ergot de fixation 72 bloque au moins en partie le mouvement de rotation du capot rotatif 18 autour de l'un des pions 34 de la paire de pions 34 ou de l'arbre du corps principal 16, tout en garantissant une position bien définie du capot rotatif 18 par rapport au corps principal 16. Pour simplifier la déformation de l'ergot de fixation 72 et de la paroi de support 70, ce dernier présente une face chanfreinée orientée vers une face interne de la paroi de fond 20 orientée vers le volume interne 24 du corps principal 16.

Selon l'invention, le capot rotatif 18 comprend le dispositif d'appui 44 du capot rotatif 18 sur la paroi de fond 20 du corps principal 16. Selon l'exemple illustré sur les figures 3 et 4, le dispositif d'appui 44 du capot rotatif 18 forme un bloc 82 qui fait saillie de la paroi de support 70 vers l'articulation 40 du capot rotatif 18. Plus précisément, le bloc 82 est un parallélépipède rectangle s'étendant longitudinalement depuis la deuxième section 76 de la paroi de support 70 vers la première extrémité longitudinale 46 de la paroi de recouvrement 36. Le bloc 82 s'étend ici transversalement sur l'ensemble de la largeur de la deuxième section 76 de la paroi de support 70, mais un bloc 82 ne s'étendant que sur une partie de la largeur de la deuxième section 76 de la paroi de support 70 ne sortirait pas du cadre de l'invention.

Le dispositif d'appui 44 et l'ergot de fixation 72 participent à délimiter une rainure 83 configurée pour loger au moins en partie la paroi de fond 20 du corps principal 16. En effet, la hauteur de la rainure 83 formée est au moins légèrement supérieure à la hauteur de la paroi de fond 20 de sorte que cette dernière puisse s'étendre au moins en partie entre l'ergot de fixation 72, et le bloc 82, formant le dispositif d'appui 44.

Tel qu'illustré sur la figure 4, le bloc 82 présente une face de contact orientée vers la paroi de fond 20 et en contact avec la face interne de la paroi de fond 20. Une fois que le capot rotatif 18 est rendu solidaire du corps principal 16 par l'ergot de fixation 72, le bloc 82 forme une butée du capot rotatif 18 contre la paroi de fond 20. Le dispositif d'appui 44, formée ici au moins par le bloc 82, empêche ainsi le capot rotatif 18 de s'enfoncer plus dans le volume interne 24 du corps principal 16.

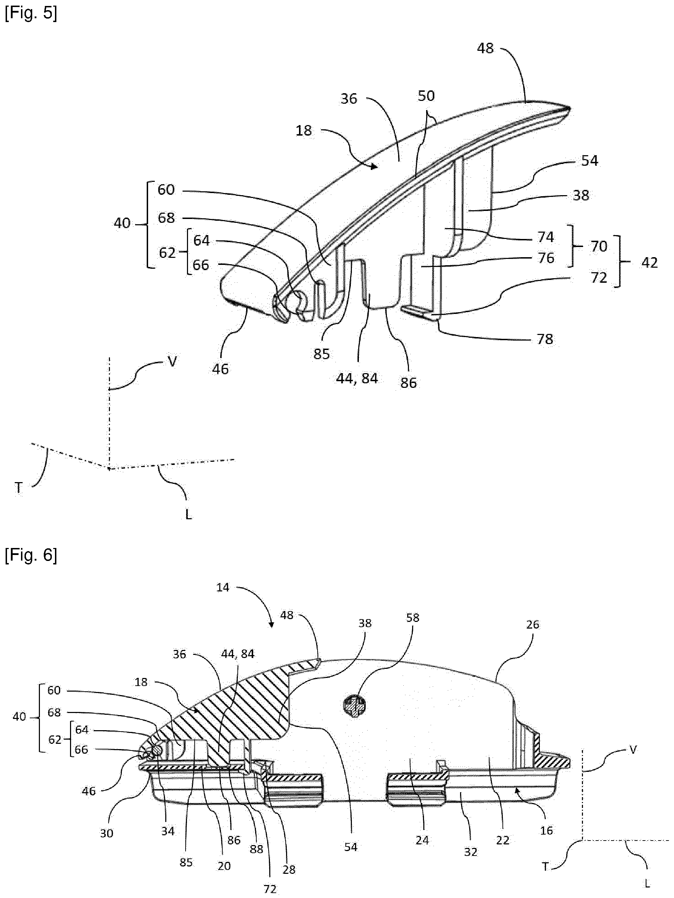

On va maintenant décrire un deuxième mode de réalisation de l'invention en référence aux figures 5 et 6, dans lequel certaines références utilisées lors de la description du premier mode de réalisation seront également réutilisées, ces références étant attribuées à des objets de l'invention similaires ou identiques.

Selon ce deuxième mode de réalisation et en référence à la figure 5, le dispositif d'appui 44 du capot rotatif 18 sur la paroi de fond du corps principal forme une excroissance 84 de la paroi de renfort 38 s'étendant vers la paroi de fond du corps principal, cette excroissance 84 présentant un bord libre 86 destiné à être en contact avec la paroi de fond. Plus précisément, la paroi de renfort 38 présente un bord interne 85 en regard de la paroi de fond, l'excroissance 84 s'étendant depuis ce bord interne 85 de la paroi de renfort 38 vers la paroi de fond du corps principal. La hauteur de l'excroissance 84 correspond au moins à la hauteur mesurée entre le bord interne 85 de la paroi de renfort 38 de la face interne de la paroi de fond. De plus, l'excroissance 84 ne s'étend qu'en partie sur la longueur de la paroi de renfort 38, la longueur étant mesurée le long d'un axe parallèle à la direction longitudinale L. L'excroissance 84 est positionnée entre la paroi de support 70 et la première extrémité longitudinale 46 de la paroi de recouvrement 36 selon la direction longitudinale L.

Tel qu'illustré sur la figure 6, qui est une vue en coupe du connecteur 14 selon le premier plan de coupe P, l'excroissance 84 de la paroi de renfort 38 est en contact avec la paroi de fond 20 du corps principal 16. Plus précisément et selon ce deuxième mode de réalisation, la paroi de fond 20 comprend une saignée 88 logeant au moins en partie le bord libre 86 du dispositif d'appui 44. La saignée 88 présente une longueur et une largeur suffisante pour que le bord libre 86 de l'excroissance 84 puisse au moins se loger dans la saignée 88.

Selon un mode de réalisation alternatif, la paroi de fond 20 est plane, l'excroissance 84 étant directement en contact avec la face interne de la paroi de fond 20. On comprend par « plane » que la paroi de fond 20 ne comprend ni saignée, ni nervure au niveau de sa face interne.

Après que le crochet du bras soit installé dans le connecteur 14 du balai d'essuyage, le capot rotatif 18 est solidarisé à la paroi de fond 20 du corps principal 16 par l'ergot de fixation 72 du capot rotatif 18. Une fois installé, le bord libre 86 de l'excroissance 84 de la paroi de renfort 38 bute contre le fond de la saignée 88, empêchant ainsi le capot rotatif 18 de s'enfoncer dans le volume interne 24 du corps principal 16. De plus, le bord libre 86 de l'excroissance 84 et l'ergot de fixation 72 sont réalisés de sorte à prendre en sandwich la paroi de fond 20, les hauteurs de chacun de ces éléments étant adaptées pour permettre cet agencement en sandwich.

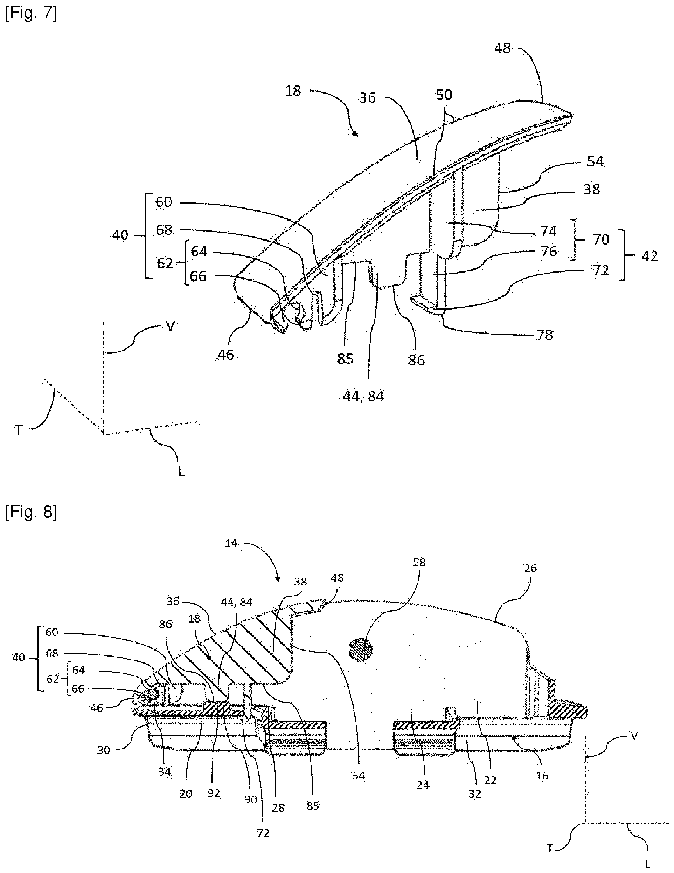

On va maintenant décrire un troisième mode de réalisation en référence aux figures 7 et 8, dans lequel certaines références utilisées lors de la description des modes de réalisation précédents seront également réutilisées, ces références étant attribuées à des objets de l'invention similaires.

Selon ce troisième mode de réalisation et en référence à la figure 7, le dispositif d'appui 44 du capot rotatif 18 sur la paroi de fond du corps principal comprend également l'excroissance 84 de la paroi de renfort 38 s'étendant vers la paroi de fond du corps principal, cette excroissance 84 présentant un bord libre 86 destinée à être en contact avec la paroi de fond. Toutefois et à la différence de l'excroissance 84 décrite dans le deuxième mode de réalisation de l'invention ci-dessus, la hauteur de l'excroissance 84 est inférieure à une hauteur mesurée entre le bord interne 85 de la paroi de renfort 38 et la face interne de la paroi de fond.

Tel qu'illustré sur la figure 8, qui est une vue en coupe du connecteur 14 selon le premier plan de coupe P, la paroi de fond 20 comprend une nervure 90 qui fait saillie depuis la paroi de fond 20 vers le capot rotatif 18 le long des directions longitudinale L et verticale V. La nervure 90 présente un bord d'extrémité libre 92 en contact avec le bord libre 86 de l'excroissance 84 de la paroi de renfort 38 lorsque le capot rotatif 18 est solidarisé à la paroi de fond 20 par l'ergot de fixation 72. Plus précisément, le capot rotatif 18, et plus précisément l'excroissance 84 de la paroi de renfort 38, prend appui sur la nervure 90 de la paroi de fond 20 lorsque le capot rotatif 18 est rendu solidaire de la paroi de fond 20 par l'ergot de fixation 72, empêchant ainsi le capot rotatif 18 de s'enfoncer dans le volume interne 24 du corps principal 16. De plus, le bord libre 86 de l'excroissance 84, l'ergot de fixation 72 et la nervure 90 sont réalisés de sorte à prendre en sandwich la paroi de fond 20, les hauteurs de chacun de ces éléments étant adaptées pour permettre cet agencement en sandwich.

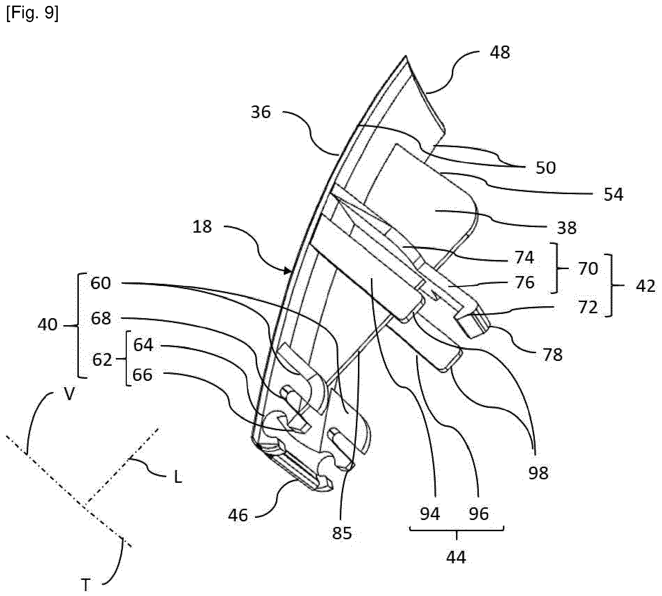

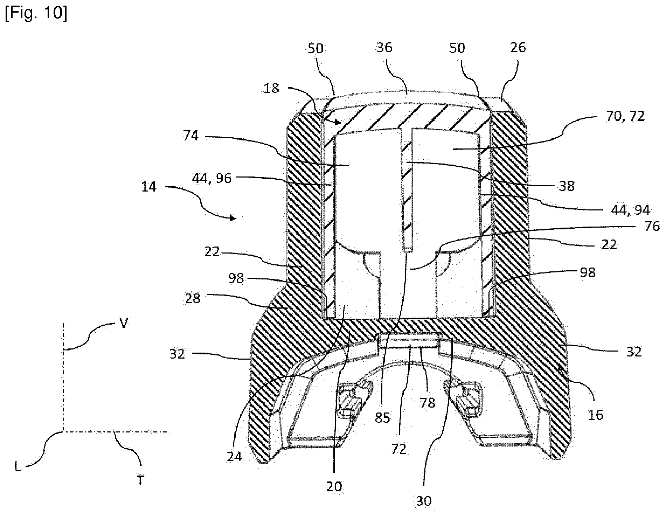

On va maintenant décrire un quatrième mode de réalisation en référence aux figures 9 et 10, dans lequel certaines références utilisées lors de la description des modes de réalisation précédents seront également réutilisées, ces références étant attribuées à des objets de l'invention similaires.

Selon ce quatrième mode de réalisation et en référence à la figure 9, le dispositif d'appui 44 du capot rotatif 18 sur la paroi de fond du corps principal comprend au moins une patte 94, 96 s'étendant parallèlement au plan d'extension principale de la paroi de renfort 38 du capot rotatif 18 depuis la paroi de recouvrement 36 vers la paroi de fond du corps principal.

Plus précisément et selon l'exemple illustré sur ici, le dispositif d'appui 44 comprend une première patte 94 et une deuxième patte 96 s'étendant chacune depuis l'un des bords latéraux 50 de la paroi de recouvrement 36 vers un bout libre 98. Les deux pattes 94, 96 sont avantageusement alignées l'une par rapport à l'autre le long d'un axe parallèle à la direction transversale T tout en s'étendant dans des plans distincts l'un de l'autre et parallèles entre eux. Les deux pattes 94, 96 présentent une même hauteur, cette hauteur correspondant à la hauteur mesurée entre une ligne d'où émerge l'une des pattes 94, 96 de l'un des bords latéraux 50 de la paroi de recouvrement 36 et le bout libre 98.

Tel qu'illustré sur la figure 10, qui est une vue en coupe du connecteur 14 selon un deuxième plan de coupe Q parallèle aux directions transversale T et verticale V et illustré sur la figure 2, le bout libre 98 de chacune des pattes 94, 96 du capot rotatif 18 est en contact avec la paroi de fond 20, les première et deuxième pattes 94, 96 du capot rotatif 18 s'étendant le long des parois latérales 22 du corps principal 16. Plus précisément, les pattes 94, 96 du capot rotatif 18 prennent appui sur la paroi de fond 20 au niveau de leur bout libre 98 lorsque le capot rotatif 18 est rendu solidaire de la paroi de fond 20 par l'ergot de fixation 72, empêchant ainsi le capot rotatif 18 de s'enfoncer dans le volume interne 24 du corps principal 16. La mise en appui des bouts libres 98 contre la paroi de fond 20 intervient avantageusement au voisinage immédiat de l'angle formé entre la paroi de fond 20 et les parois latérales 22 dans le volume interne 24.

L'invention est définie par les revendications, la position de l'excroissance ou encore des pattes du capot rotatif pouvant varier hors des exemples de réalisation. De plus, les modes de réalisation décrits ci-dessus ne sont pas strictement limitatifs et peuvent être combinés avec un ou plusieurs autres modes de réalisation décrits ci-dessus.

## Revendications

1. Connecteur (14) d'un balai d'essuyage (6), comprenant au moins un corps principal (16) et un capot rotatif (18), le corps principal (16) comportant au moins une paroi de fond (20) et deux parois latérales (22) participant à délimiter un volume interne (24) au moins en partie fermé par le capot rotatif (18), le capot rotatif (18) comprenant au moins une paroi de recouvrement (36), une paroi de renfort (38), une articulation (40) et un dispositif d'accrochage (42) pour solidariser le capot rotatif (18) par rapport à la paroi de fond (20) du corps principal (16), la paroi de recouvrement (36) s'étendant longitudinalement entre deux extrémités longitudinales (46, 48), l'articulation (40) étant ménagée au niveau de l'une des extrémités longitudinales (46, 48) de la paroi de recouvrement (36) et assurant une rotation du capot rotatif (18) autour d'un axe (R), la paroi de renfort (38) s'étendant depuis la paroi de recouvrement (36) vers la paroi de fond (20) du corps principal (16), **caractérisé en ce que** le capot rotatif (18) comprend un dispositif d'appui (44) du capot rotatif (18) sur la paroi de fond (20) du corps principal (16), **caractérisé en ce que** le dispositif d'accrochage (42) comprend une paroi de support (70) et un ergot de fixation (72), la paroi de support (70) s'étendant depuis la paroi de recouvrement (36) vers la paroi de fond (20) du corps principal (16) en présentant une extrémité libre (78), l'ergot de fixation (72) étant ménagé au niveau d'une extrémité libre (78) de la paroi de support (70) de sorte à attacher le capot rotatif (18) sur la paroi de fond (20) du corps principal (16).

2. Connecteur (14) selon la revendication 1, dans lequel la paroi de support (70) du dispositif d'accrochage (42) s'étend dans un plan sécant et distinct du plan dans lequel s'inscrit la paroi de renfort (38).

3. Connecteur (14) selon la revendication 1, dans lequel le dispositif d'appui (44) du capot rotatif (18) forme un bloc (82) qui fait saillie de la paroi de support (70).

4. Connecteur (14) selon l'une quelconque des revendications 1 ou 2, dans lequel le dispositif d'appui (44) et l'ergot de fixation (72) délimitent une rainure (83) configurée pour loger au moins en partie la paroi de fond (20) du corps principal (16).

5. Connecteur (14) selon l'une quelconque des revendications 1 ou 2, dans lequel le dispositif d'appui (44) forme une excroissance (84) de la paroi de renfort (38) en s'étendant vers la paroi de fond (20) du corps principal (16), le dispositif d'appui (44) comprenant un bord libre (86) configuré pour être en contact avec la paroi de fond (20).

6. Connecteur (14) selon l'une quelconque des revendications 1 ou 2, dans lequel la paroi de recouvrement (36) comprend deux bords latéraux (50) s'étendant entre chacune des extrémités longitudinales (46, 48) de la paroi de recouvrement (36) et configurés pour être en contact avec les parois latérales (22) du corps principal (16), le dispositif d'appui (44) comprenant au moins une patte (94, 96) s'étendant dans un plan parallèle au plan d'extension principale de la paroi de renfort (38) en faisant saillie depuis l'un des bords latéraux (50) de la paroi de recouvrement (36) vers la paroi de fond (20) du corps principal (16).

7. Connecteur (14) selon l'une quelconque des revendications précédentes, dans lequel la paroi de recouvrement (36) du capot rotatif (18) est logée dans le volume interne (24) du corps principal (16).

8. Connecteur (14) selon l'une quelconque des revendications précédentes, dans lequel l'articulation (40) comprend au moins un palier de rotation (62) ouvert et dans lequel est logé au moins un pion (34) du corps principal (16), le capot rotatif (18) pivotant autour du pion (34) du corps principal (16), l'articulation (40) comprenant au moins une encoche (68) distincte du palier de rotation (62) et facilitant l'insertion du pion (34) du corps principal (16) dans le palier de rotation (62).

9. Balai d'essuyage (6) comprenant au moins un connecteur (14) selon l'une quelconque des revendications précédentes.

## Patentansprüche

1. Verbinder (14) eines Wischblattes (6), welcher mindestens einen Hauptkörper (16) und eine drehbare Haube (18) umfasst, wobei der Hauptkörper (16) mindestens eine Bodenwand (20) und zwei Seitenwände (22) aufweist, die daran beteiligt sind, ein durch die drehbare Haube (18) wenigstens teilweise geschlossenes Innenvolumen (24) zu begrenzen, wobei die drehbare Haube (18) mindestens eine Abdeckwand (36), eine Verstärkungswand (38), ein Gelenk (40) und eine Einhängevorrichtung (42), um die drehbare Haube (18) bezüglich der Bodenwand (20) des Hauptkörpers (16) fest zu verbinden, umfasst, wobei sich die Abdeckwand (36) in Längsrichtung zwischen zwei Längsenden (46, 48) erstreckt, wobei das Gelenk (40) an einem der Längsenden (46, 48) der Abdeckwand (36) ausgebildet ist und eine Drehung der drehbaren Haube (18) um eine Achse (R) sicherstellt, wobei sich die Verstärkungswand (38) von der Abdeckwand (36) in Richtung der Bodenwand (20) des Hauptkörpers (16) erstreckt, **dadurch gekennzeichnet, dass** die drehbare Haube (18) eine Vorrichtung zur Abstützung (44) der drehbaren Haube (18) auf der Bodenwand (20) des Hauptkörpers (16) umfasst, **dadurch gekennzeichnet, dass** die Einhängevorrichtung (42) eine Stützwand (70) und eine Befestigungsnase (72) umfasst, wobei sich die Stützwand (70) von der Abdeckwand (36) in Richtung der Bodenwand (20) des Hauptkörpers (16) erstreckt und dabei ein freies Ende (78) aufweist, wobei die Befestigungsnase (72) an dem freien Ende (78) der Stützwand (70) ausgebildet ist, um so die drehbare Haube (18) an der Bodenwand (20) des Hauptkörpers (16) zu befestigen.

2. Verbinder (14) nach Anspruch 1, wobei sich die Stützwand (70) der Einhängevorrichtung (42) in einer Ebene erstreckt, welche die Ebene, in der die Verstärkungswand (38) verläuft, schneidet und von dieser verschieden ist.

3. Verbinder (14) nach Anspruch 1, wobei die Abstützvorrichtung (44) der drehbaren Haube (18) einen Block (82) bildet, der von der Stützwand (70) vorsteht.

4. Verbinder (14) nach einem der Ansprüche 1 oder 2, wobei die Abstützvorrichtung (44) und die Befestigungsnase (72) eine Nut (83) begrenzen, die dafür ausgelegt ist, die Bodenwand (20) des Hauptkörpers (16) wenigstens teilweise aufzunehmen.

5. Verbinder (14) nach einem der Ansprüche 1 oder 2, wobei die Abstützvorrichtung (44) einen Vorsprung (84) der Verstärkungswand (38) bildet, indem sie sich in Richtung der Bodenwand (20) des Hauptkörpers (16) erstreckt, wobei die Abstützvorrichtung (44) einen freien Rand (86) umfasst, der dafür ausgelegt ist, sich mit der Bodenwand (20) in Kontakt zu befinden.

6. Verbinder (14) nach einem der Ansprüche 1 oder 2, wobei die Abdeckwand (36) zwei Seitenränder (50) umfasst, die sich jeweils zwischen den Längsenden (46, 48) der Abdeckwand (36) erstrecken und dafür ausgelegt sind, sich mit den Seitenwänden (22) des Hauptkörpers (16) in Kontakt zu befinden, wobei die Abstützvorrichtung (44) mindestens eine Lasche (94, 96) umfasst, die sich in einer Ebene erstreckt, die zur Haupterstreckungsebene der Verstärkungswand (38) parallel ist, indem sie von einem der Seitenränder (50) der Abdeckwand (36) in Richtung der Bodenwand (20) des Hauptkörpers (16) vorsteht.

7. Verbinder (14) nach einem der vorhergehenden Ansprüche, wobei die Abdeckwand (36) der drehbaren Haube (18) in dem Innenvolumen (24) des Hauptkörpers (16) aufgenommen ist.

8. Verbinder (14) nach einem der vorhergehenden Ansprüche, wobei das Gelenk (40) mindestens ein Drehlager (62) umfasst, das offen ist und in dem mindestens ein Zapfen (34) des Hauptkörpers (16) aufgenommen ist, wobei die drehbare Haube (18) um den Zapfen (34) des Hauptkörpers (16) schwenkt, wobei das Gelenk (40) mindestens einen Einschnitt (68) umfasst, der von dem Drehlager (62) verschieden ist und das Einsetzen des Zapfens (34) des Hauptkörpers (16) in das Drehlager (62) erleichtert.

9. Wischblatt (6), welches mindestens einen Verbinder (14) nach einem der vorhergehenden Ansprüche umfasst.

## Claims

1. Connector (14) for a wiper (6), comprising at least a main body (16) and a rotary cover (18), the main body (16) comprising at least a bottom wall (20) and two lateral walls (22) that contribute to delimiting an internal volume (24) that is at least partially closed by the rotary cover (18), the rotary cover (18) comprising at least a covering wall (36), a reinforcing wall (38), an articulation (40) and an attachment device (42) for securing the rotary cover (18) relative to the bottom wall (20) of the main body (16), the covering wall (36) extending longitudinally between two longitudinal ends (46, 48), the articulation (40) being formed at one of the longitudinal ends (46, 48) of the covering wall (36) and allowing the rotary cover (18) to rotate about an axis (R), the reinforcing wall (38) extending from the covering wall (36) toward the bottom wall (20) of the main body (16), **characterized in that** the rotary cover (18) comprises a bearing device (44) via which the rotary cover (18) bears against the bottom wall (20) of the main body (16), **characterized in that** the attachment device (42) comprises a support wall (70) and a fixing lug (72), the support wall (70) extending from the covering wall (36) toward the bottom wall (20) of the main body (16) and having a free end (78), the fixing lug (72) being formed at a free end (78) of the support wall (70) so as to attach the rotary cover (18) to the bottom wall (20) of the main body (16).

2. Connector (14) according to Claim 1, wherein the support wall (70) of the attachment device (42) extends in a plane secant to and distinct from the plane in which the reinforcing wall (38) is inscribed.

3. Connector (14) according to Claim 1, wherein the bearing device (44) of the rotary cover (18) forms a block (82) which projects from the support wall (70).

4. Connector (14) according to either one of Claims 1 and 2, wherein the bearing device (44) and the fixing lug (72) delimit a groove (83) configured to at least partially house the bottom wall (20) of the main body (16) .

5. Connector (14) according to either one of Claims 1 and 2, wherein the bearing device (44) forms a protrusion (84) of the reinforcing wall (38) extending toward the bottom wall (20) of the main body (16), the bearing device (44) comprising a free edge (86) configured to be in contact with the bottom wall (20).

6. Connector (14) according to either one of Claims 1 and 2, wherein the covering wall (36) comprises two lateral edges (50) extending between each of the longitudinal ends (46, 48) of the covering wall (36) and configured to be in contact with the lateral walls (22) of the main body (16), the bearing device (44) comprising at least one tab (94, 96) extending in a plane parallel to the main plane of extension of the reinforcing wall (38) and projecting from one of the lateral edges (50) of the covering wall (36) toward the bottom wall (20) of the main body (16).

7. Connector (14) according to any one of the preceding claims, wherein the covering wall (36) of the rotary cover (18) is housed in the internal volume (24) of the main body (16).

8. Connector (14) according to any one of the preceding claims, wherein the articulation (40) comprises at least one rotation bearing (62) which is open and in which there is housed at least one pin (34) of the main body (16), the rotary cover (18) pivoting about the pin (34) of the main body (16), the articulation (40) comprising at least one notch (68) distinct from the rotation bearing (62) and facilitating the insertion of the pin (34) of the main body (16) into the rotation bearing (62) .

9. Wiper (6) comprising at least one connector (14) according to any one of the preceding claims.
